# DEMANDE DE BREVET EUROPEEN

(11) **EP 4 814 787 A1**
(43) Date de publication de la demande: **30.09.2026**
(21) Numéro de dépôt: 26167382.6
(22) Date de dépôt: 24.03.2026
(51) Int. Cl.: G06K 19/077

(54) **CARTE À PUCE MÉTALLIQUE ET PROCÉDÉ DE FABRICATION D'UNE TELLE CARTE À PUCE**

(30) Priorité: 25.03.2025 FR 2503085
(71) Demandeur: IDEMIA France, 92400 Courbevoie (FR)
(72) Inventeur: DUVAL, Agnès, 92400 COURBEVOIE (FR); GAC, Philippe, 92400 COURBEVOIE (FR); GROULT, Tiphaine, 92400 COURBEVOIE (FR)
(74) Mandataire: Idemia

(57) **Abrégé**

L'invention concerne un corps de carte (2) comprenant une couche métallique (4) présentant un premier évidement (10) formé depuis une première face (5) et un deuxième évidement (11) formé depuis une deuxième face (6) et débouchant dans le premier évidement (10), un module électronique (15) reçu dans le premier évidement et comprenant un microcircuit (23) et un premier jeu de plots de connexion (24) raccordé électriquement au microcircuit, un bloc de connexion électrique (19) reçu dans le deuxième évidement (11) et comprenant un deuxième jeu de plots de connexion (29) raccordé électriquement par contact avec le premier jeu de plots de connexion, et une antenne radiofréquence (17) disposée hors du premier évidement et étant raccordée électriquement au deuxième jeu de plots de connexion (29), le premier jeu de plots de connexion et le deuxième jeu de plots de connexion interconnectant électriquement le microcircuit et l'antenne radiofréquence.

## Description

### DOMAINE TECHNIQUE DE L'INVENTION

L'invention concerne une carte à puce, et plus particulièrement une carte à puce métallique, c'est-à-dire une carte à puce comportant un corps de carte comprenant une couche métallique.

L'invention concerne également un procédé de fabrication d'une telle carte à puce.

### ÉTAT DE LA TECHNIQUE

Une carte à puce est utilisée dans de nombreuses applications, par exemple en tant que carte bancaire, carte de fidélité ou encore carte d'accès. Elle peut avoir différents formats selon son utilisation. Une carte à puce est conçue pour remplir diverses fonctions, notamment réaliser des transactions bancaires, authentifier son titulaire, ou encore accéder à des zones d'accès limité ou à des services sécurisés.

Une carte à puce comprend généralement un corps de carte dans lequel est intégré un module électronique. Le module électronique est configuré pour exécuter des fonctions associées à l'utilisation de la carte. Le corps de carte peut également intégrer des moyens de communication permettant un échange de données avec un terminal externe.

La carte à puce, en particulier son module électronique, comprend par exemple des plages de contacts externes, accessibles à la surface de la carte, pour établir une connexion électrique avec des broches de contact du terminal externe. Ce mode de communication est dit « par contact ».

Certaines cartes à puce comprennent une antenne radiofréquence pour établir une communication dite « sans contact », leur permettant d'échanger des données avec un terminal externe sans connexion physique.

Ces cartes à puce peuvent en outre avoir la capacité d'établir une communication par contact, en utilisant les plages de contacts externes : on parle alors de cartes « dual » (ou cartes à double interface de communication), ces cartes étant ainsi capable d'établir une communication avec et sans contact.

Une carte à puce métallique est une carte qui comporte au moins une couche métallique formant le corps de la carte. L'effet visuel du métal, les reflets brillants ou brossés ainsi que le poids du métal confèrent à ce type de carte une impression de qualité et de prestige, recherchée par certains utilisateurs.

Il a cependant été observé que la présence de métal dans le corps d'une carte à puce pose des difficultés majeures lorsque la carte embarque une antenne radiofréquence pour établir une communication sans contact. En effet, la couche métallique agit comme un blindage électromagnétique et peut perturber les signaux échangés par l'antenne radiofréquence avec l'extérieur, pouvant ainsi perturber les communications sans contact d'une carte à puce avec un terminal externe.

Des solutions ont alors été proposées pour fournir une carte métallique capable d'établir une communication sans contact performante malgré la présence de la couche métallique.

Par exemple, le document US 2020/0364532 A1 décrit une carte à puce métallique dans laquelle la couche métallique présente, sur une première face, un évidement recevant le module électronique. La carte à puce comprend également une couche isolante, disposée en regard d'une deuxième face de la couche métallique, opposée à la première face, et une antenne relais portée par la couche isolante.

Dans un mode de réalisation de ce document, le module électronique est pourvu d'une antenne radiofréquence qui est couplée électromagnétiquement avec l'antenne relais de la couche isolante. La couche métallique présente alors un trou traversant entre le premier évidement et la couche isolante pour permettre le couplage magnétique (i.e. sans fil) entre l'antenne radiofréquence du module électronique et l'antenne relais de la couche isolante.

Dans un autre mode de réalisation de ce document, le module électronique est dépourvu d'une antenne radiofréquence et est raccordé électriquement, via des fils conducteurs, à l'antenne relais par des fils conducteurs. La couche métallique présente, là encore, un trou entre le premier évidement et la couche isolante à l'intérieur duquel courent les fils conducteurs.

Il existe donc un besoin pour fournir une carte à puce métallique de fabrication simple, capable d'établir une communication sans contact avec un lecteur externe.

### EXPOSÉ DE L'INVENTION

La présente invention vise à remédier à tout ou partie des inconvénients de l'état de la technique cités ci-dessus, pouvant mener à d'autres avantages.

À cet effet, l'invention vise, selon un premier aspect, une carte à puce comportant :
- un corps de carte comprenant une couche métallique, la couche métallique ayant une première face, une deuxième face opposée à la première face et une épaisseur définie entre la première face et la deuxième face, la couche métallique présentant un premier évidement formé depuis la première face et s'étendant sur une partie de l'épaisseur de la couche métallique et un deuxième évidement formé depuis la deuxième face et s'étendant sur une partie de l'épaisseur de la couche métallique, le premier évidement débouchant dans le deuxième évidement,
- un module électronique comprenant :
   ∘ un support ayant une face interne et une face externe opposée à la face interne,
   ∘ un ensemble de plages de contacts externes disposé sur la face externe du support et étant configuré pour permettre une communication par contact avec un terminal externe,
   ∘ un microcircuit porté par le support et étant raccordé électriquement au contact externe, et
   ∘ un premier jeu de plots de connexion disposé sur la face interne du support et étant raccordé électriquement au microcircuit,
   le module électronique étant reçu dans le premier évidement avec l'ensemble de plages de contacts externes qui affleure la première face de la couche métallique,
   - un bloc de connexion électrique comprenant :
      ∘ un substrat présentant une face interne et une face externe opposée à la face interne, et
      ∘ un deuxième jeu de plots de connexion disposé sur la face interne du substrat,

le bloc de connexion électrique étant reçu dans le deuxième évidement, avec le deuxième jeu de plots de connexion qui est raccordé électriquement par contact avec le premier jeu de plots de connexion du module électronique,
   - une première antenne radiofréquence disposée hors du premier évidement et étant raccordée électriquement au deuxième jeu de plots de connexion du bloc de connexion électrique,
le premier jeu de plots de connexion du module électronique et le deuxième jeu de plots de connexion du bloc de connexion électrique interconnectant électriquement le microcircuit et la première antenne radiofréquence.

Dans la carte à puce selon l'invention, la première antenne radiofréquence est déportée par rapport au module électronique. Il est alors possible pour la première antenne radiofréquence d'occuper une surface supérieure à celle du module électronique, tout en préservant l'aspect métallique de la première face de la couche métallique.

En d'autres termes, la carte à puce peut comporter un module électronique de taille relativement faible sans contraindre la taille de la première antenne radiofréquence. Cela permet ainsi à la carte à puce selon l'invention d'avoir un aspect métallique important, tout en pouvant établir une communication sans contact performante.

En effet, plus la taille du module électronique est faible, et plus la surface métallique apparente sur la première face de la couche métallique est grande, alors que plus la taille de la première antenne radiofréquence est grande, et plus la communication sans contact est performante.

En outre, dans la carte à puce selon l'invention, le microcircuit et la première antenne radiofréquence sont raccordés électriquement par l'intermédiaire du bloc de connexion électrique, qui établit une connexion électrique par contact (direct ou par l'intermédiaire d'un élément d'interface électriquement conducteur) du premier jeu de plots de connexion du module électronique avec le deuxième jeu de plots de connexion du bloc de connexion électrique.

Autrement dit, pour interconnecter électriquement le microcircuit et la première antenne radiofréquence, il suffit d'introduire le module électronique et/ou le bloc de connexion électrique dans son évidement respectif dans la couche métallique, jusqu'à ce que les plots de connexion viennent en contact.

La carte à puce selon l'invention est donc également très simple à fabriquer. On notera encore que, du fait de la connexion physique entre la première antenne radiofréquence et le microcircuit, les échanges de signaux sont fiables et les pertes d'énergie sont très faibles, améliorant encore la performance de communication sans contact.

Il est entendu par « raccordé électriquement par contact » que le deuxième jeu de plots de connexion établit une liaison électrique avec le premier jeu de plots de connexion, soit par un contact direct, c'est-à-dire sans aucun élément intermédiaire entre leur surface conductrice respective, soit par l'intermédiaire d'un élément d'interface électriquement conducteur disposé entre les deux jeux de plots, tel qu'un adhésif électriquement conducteur.

Des caractéristiques préférées, simples, commodes et économiques de la carte à puce selon l'invention sont présentées ci-après.

Le bloc de connexion électrique peut être un circuit imprimé (ou PCB de l'anglais « Printed Circuit Board »).

Le bloc de connexion électrique peut comprendre un via, intégré dans le substrat, pour raccorder électriquement le deuxième jeu de plots de connexion et la première antenne radiofréquence.

Un via est un trou métallisé configuré pour établir un raccordement électrique entre deux composants, ici le microcircuit et la première antenne radiofréquence.

L'intégration d'un via dans bloc de connexion électrique permet une fabrication simple, compatible avec des techniques courantes et bien maîtrisées de perçage et de métallisation.

Le corps de carte peut comporter un élément d'interface électriquement conducteur disposé entre le module électronique et le bloc de connexion électrique pour établir le raccordement électrique entre le premier jeu de plots de connexion et le deuxième jeu de plots de connexion.

L'élément d'interface électriquement conducteur peut se présenter sous la forme d'une pâte ou d'un film. L'élément d'interface électriquement conducteur peut être un film conducteur anisotrope (ou ACF de l'anglais « Anisotropic Conductive Film »).

Un tel élément d'interface assure une connexion électrique fiable en compensant les irrégularités de surface. Il permet ainsi de réduire les résistances de contact.

La première antenne radiofréquence peut être disposée soit dans le deuxième évidement de la couche métallique, soit en regard de la deuxième face de la couche métallique.

Le substrat du bloc de connexion électrique peut porter la première antenne radiofréquence. La première antenne radiofréquence peut être disposée dans la face externe du substrat du bloc de connexion électrique.

Dans cette configuration, la première antenne radiofréquence est logée dans un évidement de la couche métallique. Il n'est donc pas nécessaire d'ajouter une couche supplémentaire pour porter l'antenne. Il est alors possible d'affecter toute l'épaisseur utilisable à la couche métallique, et ainsi de maximiser le poids de la carte.

L'épaisseur maximale utilisable correspond à l'épaisseur de matériau pouvant être allouée aux différentes couches de la carte tout en respectant les normes qui imposent une épaisseur totale maximale. Cette épaisseur totale maximale est définie par des normes, notamment la norme ISO/CEI 7810, qui spécifie une épaisseur totale maximale de 0,84 mm pour une carte au format ID-1.

La carte à puce peut comporter en outre une couche isolante, distincte du bloc de connexion électrique, et une deuxième antenne radiofréquence, la couche isolante portant la deuxième antenne radiofréquence la couche isolante et la deuxième antenne radiofréquence étant disposées en regard de la deuxième face de la couche métallique, la deuxième antenne radiofréquence étant configurée pour permettre un couplage magnétique avec la première antenne radiofréquence.

En d'autres termes, la deuxième antenne radiofréquence sert de relais à la première antenne radiofréquence en captant l'énergie d'un champ électromagnétique et en le transférant par couplage magnétique à ladite première antenne radiofréquence.

Du fait de sa disposition en regard de la deuxième face de la couche métallique, la deuxième antenne radiofréquence peut avoir une taille plus importante que celle de la première antenne radiofréquence. Elle peut ainsi capter davantage d'énergie du champ électromagnétique émis par un terminal externe que la première antenne. Cela permet d'améliorer la puissance du signal reçu par le microcircuit.

Le microcircuit peut être disposé sur la face interne du support du module électronique.

La carte à puce peut comporter une couche de blindage magnétique externe disposée entre la deuxième face de la couche métallique et la couche isolante, la couche de blindage magnétique externe présentant une première ouverture traversante alignée avec le deuxième évidement, le bloc de connexion électrique étant reçu au moins en partie dans la première ouverture traversante de la couche de blindage magnétique externe.

Lorsqu'un terminal externe émet un champ magnétique pour interagir avec la deuxième antenne radiofréquence, la couche métallique peut absorber une partie de l'énergie électromagnétique et générer des courants de Foucault. Ces courants induisent des pertes d'énergie qui réduisent l'intensité du champ magnétique.

La couche de blindage magnétique externe peut être réalisée en ferrite. La ferrite a la capacité de canaliser le flux magnétique. Ainsi, la couche de blindage magnétique externe, en étant interposée entre la couche métallique et la deuxième antenne radiofréquence, agit comme un guide de flux magnétique et détourne le flux magnétique de la couche métallique pour le guider vers la deuxième antenne radiofréquence.

En outre, la configuration du bloc de connexion électrique disposé au moins en partie dans la première ouverture traversante de la couche de blindage magnétique externe permet de disposer la première antenne radiofréquence au plus près de la deuxième antenne radiofréquence, et ainsi d'améliorer le couplage magnétique.

La couche métallique peut comprendre un premier organe de butée configuré pour empêcher un déplacement de l'organe de connexion vers le premier évidement et/ou un deuxième organe de butée configuré pour empêcher un déplacement du module électronique vers le deuxième évidement.

En d'autres termes, la couche métallique peut comprendre soit un premier organe de butée, soit un deuxième organe de butée, soit les deux.

La présence d'un premier organe de butée et/ou d'un deuxième organe de butée facilite l'introduction du module électronique et du bloc de connexion électrique par deux faces opposées de la couche métallique et garantit un positionnement correct. Ce type de montage permet d'introduire le module électronique et le bloc de connexion électrique simultanément ou presque (pas l'un après l'autre) et est donc très rapide.

Le premier organe de butée peut être formé par la couche métallique.

Autrement dit, l'organe de butée n'est pas un élément rapporté. Le premier organe de butée peut par exemple être usiné dans la couche métallique. La quantité de matière métallique retirée est donc minimisée, et le poids de la carte est maximisé.

Le premier organe de butée peut être un épaulement formé par une différence de section entre le premier évidement et le deuxième évidement.

Alternativement, le premier évidement et le deuxième évidement peuvent avoir une section constante et identique.

Le deuxième organe de butée peut être formé par le bloc de connexion électrique disposé dans le deuxième évidement.

Autrement dit, c'est le bloc de connexion électrique dans le deuxième évidement qui empêche le déplacement du module électronique dans le deuxième évidement. Cette configuration permet ainsi à la fois de faciliter l'introduction du module électronique et de raccorder électriquement le premier jeu de plots de connexion et le deuxième jeu de plots de connexion.

La carte peut comporter une couche de blindage magnétique interne disposée dans le deuxième évidement, entre l'organe de connexion et le premier organe de butée.

La couche de blindage magnétique interne a la même fonction que la couche de blindage magnétique externe vis-à-vis de la première antenne radiofréquence. Elle peut aussi être réalisée en ferrite.

La couche de blindage magnétique interne peut être constituée par la partie retirée pour créer la première ouverture traversante de la couche de blindage magnétique externe. Autrement dit, la partie enlevée pour créer la première ouverture traversante dans la couche de blindage magnétique externe est réutilisée pour former la couche de blindage magnétique interne.

Le premier évidement peut définir un premier pourtour sur la première face de la couche métallique, tandis que le deuxième évidement peut définir un deuxième pourtour sur la deuxième face de la couche métallique, le premier pourtour délimitant une surface inférieure à une surface délimitée par le deuxième pourtour.

Ainsi, lorsque la première antenne radiofréquence est intégrée dans le bloc de connexion électrique, ses dimensions peuvent être supérieures à celles du module électronique, tout en préservant l'aspect de la première face de la couche métallique.

Le module électronique peut présenter un premier contour inférieur à un deuxième contour du bloc de connexion électrique.

Le module électronique peut être dépourvu d'antenne. Le premier contour et/ou son volume peut ainsi être relativement faible.

Le premier pourtour peut présenter des dimensions inférieures à celles du deuxième pourtour.

Le deuxième contour du bloc de connexion électronique peut présenter des dimensions inférieures ou égales à celles du deuxième pourtour, mais supérieures à celles du premier pourtour.

Un jeu entre le premier contour du module électronique (au niveau des plages de contacts externes ou de sa face externe) et le premier pourtour peut être inférieur ou égal à 0,5 mm, c'est-à-dire entre 0 mm et 0,5 mm. Le jeu correspond à la distance maximale mesurée perpendiculairement entre le premier contour du module électronique et le premier pourtour.

Le jeu est alors si faible qu'en observant la première face de la carte à puce, le module électronique donne l'impression de remplir complètement le premier évidement.

Le module électronique a un volume pouvant représenter au moins 75 % d'un volume du premier évidement, c'est-à-dire entre 75 % et 100 % du volume du premier évidement.

Plus particulièrement, le volume du module électronique peut représenter au moins 80 %, 85 %, 90%, 95%, voire 100 % du volume du premier évidement.

De même, un jeu entre le deuxième contour du bloc de connexion électrique (au niveau de sa face externe) et le premier pourtour peut être inférieur ou égal à 0,5 mm. Le jeu correspond à la distance maximale mesurée perpendiculairement entre le deuxième contour du bloc de connexion électrique et le deuxième pourtour.

Le jeu est alors si faible qu'en observant la deuxième face de la carte à puce, le bloc de connexion électrique donne l'impression de remplir complètement le deuxième évidement.

Le bloc de connexion électrique a un volume pouvant représenter au moins 75 % d'un volume du deuxième évidement, c'est-à-dire entre 75 % et 100 % du volume du deuxième évidement.

Plus particulièrement, le volume du bloc de connexion électrique peut représenter au moins 80 %, 85 %, 90%, 95%, voire 100 % du volume du deuxième évidement.

L'invention vise également, selon un deuxième aspect, un procédé de fabrication d'une carte à puce selon le premier aspect, comprenant au moins des étapes de :
- introduction du bloc de connexion électrique dans le deuxième évidement depuis la deuxième face de la couche métallique,
- introduction du module électronique dans le premier évidement depuis la première face de la couche métallique,
l'interconnexion électrique entre le microcircuit et la première antenne radiofréquence étant mise en œuvre par l'introduction du module électronique et/ou l'introduction du bloc de connexion électrique dans son évidement respectif jusqu'à ce que le premier jeu de plots de connexion et le deuxième jeu de plots de connexion viennent en contact.

Au cours de l'étape d'introduction du bloc de connexion électrique, le bloc de connexion électrique peut être introduit jusqu'à venir en butée contre un premier organe de butée configuré pour empêcher un déplacement du bloc de connexion électrique vers le premier évidement, l'étape d'introduction du bloc de connexion électrique peut être mise en oeuvre avant l'étape d'introduction du module électronique et, au cours de l'étape d'introduction du module électronique, le module électronique peut être introduit jusqu'à venir en butée contre le bloc de connexion électrique.

Le procédé peut comprendre en outre une étape de :
- formation du premier évidement depuis la première face de la couche métallique,
- formation du deuxième évidement depuis la deuxième face de la couche métallique, les étapes de formation du premier évidement et de formation du deuxième évidement étant mises en œuvre avant les étapes d'introduction de l'organe de connexion et d'introduction du module électronique.

Autrement dit, le bloc de connexion électrique et le module électronique ne sont introduits qu'après que les deux évidements aient été formés, ce qui évite d'endommager le bloc de connexion électrique ou le module électronique.

### BRÈVE DESCRIPTION DES FIGURES

L'invention, selon un exemple de réalisation, sera bien comprise et ses avantages apparaitront mieux à la lecture de la description détaillée qui suit, donnée à titre indicatif et nullement limitatif, en référence aux dessins annexés.
La figure 1 est une vue de face d'une carte à puce selon un premier mode de réalisation selon l'invention.
La figure 2 est une en coupe, repérée II-II sur la figure 1, de la carte à puce de la figure 1.
La figure 3 est une vue similaire à celle de la figure 2, montrant une carte à puce selon un deuxième mode de réalisation.
La figure 4 est une vue similaire à celle de la figure 2, montrant une carte à puce selon un troisième mode de réalisation.
La figure 5 est une vue similaire à celle de la figure 2, montrant une carte à puce selon un quatrième mode de réalisation.
La figure 6 est une vue similaire à celle de la figure 2, montrant une carte à puce selon un cinquième mode de réalisation.
La figure 7 est un schéma blocs montrant des étapes d'un procédé de fabrication d'une carte à puce, conforme à l'invention.

### DESCRIPTION DÉTAILLÉE DE L'INVENTION

L'invention porte sur une carte à puce métallique configurée pour fonctionner en mode sans contact, et concerne également la fabrication de telles cartes à puce.

Une « carte à puce métallique » désigne dans le présent document une carte à puce comprenant du métal ou une combinaison (alliage) de métaux, sous la forme d'une couche métallique ou d'une pluralité de couches métalliques.

Une carte à puce métallique peut être utilisée dans de nombreuses applications, par exemple en tant que carte bancaire, carte d'accès, carte d'identité, etc.

La carte à puce peut être conforme à la norme ISO 7816 et peut fonctionner selon le standard EMV ou d'autres standards de transaction, par exemple le standard NFC (selon par exemple ISO 14443-2, ISO 10373-6, « EMV Contactless Certification »).

Une carte à puce sans contact est configurée par nature pour établir une communication sans contact avec une lecteur externe, par exemple en champ proche NFC (pour « Near Field Communication » en langue anglo-saxonne).

A cet effet, une carte à puce sans contact embarque une antenne radiofréquence pour échanger (recevoir et/ou émettre) des signaux radiofréquence avec un lecteur externe.

Une telle carte à puce peut en outre avoir la capacité d'établir une communication par contact, en utilisant des plages de contacts externes disposés à la surface de la carte : on parle alors de cartes « dual » (ou cartes à double interface de communication), ces cartes étant ainsi capable d'établir une communication avec et sans contact.

Il existe aujourd'hui une forte demande chez les utilisateurs pour des cartes à puce métalliques, notamment pour les raisons évoquées précédemment (aspects esthétiques, impression de qualité, prestige...). Il est en particulier souhaitable de produire des cartes à puce dont une part importante du corps de carte est en métal, ou du moins dont le corps de carte comporte une couche métallique avec le plus de métal visible possible, ainsi qu'un poids relativement important.

Mais lorsqu'une carte à puce sans contact comporte une couche métallique ainsi qu'une antenne radiofréquence, il a été observé que cette couche métallique perturbe les communications sans contact entre l'antenne radiofréquence et le lecteur externe, en particulier lorsque la couche métallique est disposée entre l'antenne radiofréquence et le lecteur externe, en raison du blindage électromagnétique induit par la couche métallique.

La résolution de ce problème peut conduire à des cartes à puces complexes, avec un aspect métallique fortement dégradé.

L'invention se propose ainsi de pallier cet inconvénient, en fournissant une carte à puce métallique « dual » qui soit simple à fabriquer et qui présente un fort aspect métallique.

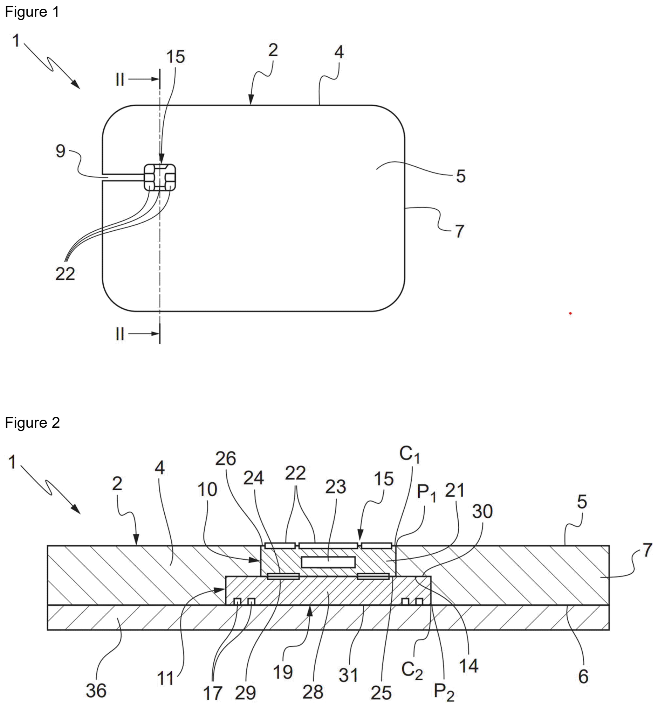

Les figures 1 et 2 représentent une carte à puce 1 selon un premier mode de réalisation de l'invention.

La carte à puce 1 comporte un corps de carte 2 comprenant une couche métallique 4. On parle alors de carte à puce métallique.

Dans l'exemple représenté, la couche métallique 4 est réalisée en un même matériau, par exemple de l'acier inoxydable, de l'argent, de l'or, du cuivre ou du tungstène. D'autres métaux peuvent bien entendu être utilisés.

La couche métallique 4 présente une première face 5, une deuxième face 6 opposée à la première face 5, et un bord périphérique 7 rejoignant les périphéries de la première face 5 et de la deuxième face 6 et formant un contour extérieur de la couche métallique.

La couche métallique 4 présente un premier évidement 10 formé depuis la première face 5 et s'étendant sur une partie de l'épaisseur de la couche métallique et un deuxième évidement 11 formé depuis la deuxième face 6 et s'étendant sur une partie de l'épaisseur de couche métallique.

L'épaisseur de la couche métallique 4 correspond à la distance séparant sa première face 5 de sa deuxième face 6, mesurée perpendiculaire à l'une de ces faces.

Le premier évidement 10 débouche dans le deuxième évidement 11. En d'autres termes, le premier évidement 10 communique avec le deuxième évidement 11.

Dans l'exemple représenté, la partie de l'épaisseur sur laquelle s'étend le premier évidement 10 est égale à environ 50% de l'épaisseur de la couche métallique 4, et la partie de l'épaisseur sur laquelle s'étend le deuxième évidement 11 est aussi égale à environ 50% de l'épaisseur de la couche métallique 4.

Le premier évidement définit un premier pourtour P1 sur la première face 5 de la couche métallique 4, tandis que le deuxième évidement 11 définit un deuxième pourtour P2 sur la deuxième face 6 de la couche métallique.

Le premier pourtour P1 délimite ici une surface inférieure à une surface délimitée par le deuxième pourtour P2. Autrement dit, le premier évidement 10 définit une ouverture sur la première face 5 de la couche métallique 4 qui est plus petite, en surface, que l'ouverture définie par le deuxième évidement 11 sur la deuxième face 6 de la couche métallique.

Dans l'exemple représenté, le premier évidement 10 et le deuxième évidement 11 ont une forme cylindrique de section rectangulaire avec des coins arrondis, avec des parois latérales qui s'étendent perpendiculairement à la première face 5 et/ou à la deuxième face 6 de la couche métallique 4.

La section du premier évidement 10 est délimitée par le premier pourtour P1, tandis que la section du deuxième évidement 11 est délimitée par le deuxième pourtour P2.

Ainsi, dans l'exemple représenté, le premier évidement 10 a une section inférieure à celle du deuxième évidement 11.

Le changement de section entre le premier évidement 10 et le deuxième évidement forme ici un épaulement 14.

En particulier, le premier évidement 10 et le deuxième évidement 11 sont alignés le long d'un même axe, de sorte que l'épaulement 14 a une forme de cadre.

La couche métallique 4 comprend une fente 9 qui traverse l'épaisseur de la couche métallique et raccorde le bord périphérique 7 avec le premier évidement 10 et le deuxième évidement 11.

Autrement dit, le premier évidement 10 et le deuxième évidement 11 débouchent sur le bord périphérique 7 via cette fente 9.

La carte à puce 1 comporte en outre un module électronique 15, une première antenne radiofréquence 17 et un bloc de connexion électrique 19 configuré pour interconnecter électriquement le module électronique 15 à la première antenne radiofréquence 17.

Le module électronique 15 comporte un support 21 sur lequel sont montés un ensemble de plages de contacts externes 22, un microcircuit 23 raccordé électriquement à l'ensemble de plages de contacts externes 22 et un premier jeu de plots de connexion 24 comprenant ici deux premiers plots de connexion qui sont raccordés électriquement au microcircuit 23.

Le microcircuit 23 est configuré pour établir une communication sans contact avec le terminal externe en utilisant la première antenne radiofréquence 17.

Le support 21 a une face interne 25, une face externe 26 opposée à la face interne 25.

L'ensemble de plages de contacts externes 22 est disposé sur la face externe 26 du support 21.

Les premiers plots de connexion 24 sont disposés sur la face interne 25 du support 21.

En pratique, le support est formé d'une plaque et d'une couche de résine (non représentées), avec l'ensemble de plages de contacts externes qui est disposé sur une première face de plaque, et le microcircuit et les premiers plots de connexion qui sont disposés sur une deuxième face de la plaque, opposée à la première face. La couche de résine est disposée sur la deuxième face de la plaque et encapsule le microcircuit. Le microcircuit et la couche de résine font saillie de la face interne du support, et notamment par rapport aux premiers plots de connexion.

L'ensemble de plages de contacts externes 22 est configuré pour permettre une communication par contact avec un terminal externe.

Le bloc de connexion électrique 19 comprend un substrat 28 sur lequel est monté un deuxième jeu de plots de connexion 29 comprenant ici deux deuxièmes plots de connexion qui sont raccordés électriquement à la première antenne radiofréquence 17.

Le substrat 28 a une face interne 30 et une face externe 31 opposée à la face interne 30.

Les deuxièmes plots de connexion 29 sont disposés sur la face interne 30 du substrat 28.

En pratique, la face interne du substrat est pourvue d'une cavité (non représentée) configurée pour recevoir au moins partiellement le microcircuit et la couche de résine du module électronique. Cela permet aux premiers plots de connexion, qui sont en retrait par rapport au microcircuit et la couche de résine, de venir en contact avec les deuxièmes plots de connexion.

Dans ce mode de réalisation, la première antenne radiofréquence 17 est portée par le substrat 28 du bloc de connexion électrique 19.

Le bloc de connexion électrique 19 est ici un circuit imprimé et comprend des vias (non représentés) pour raccorder électriquement les deuxièmes plots de connexion 29 aux extrémités de la deuxième antenne radiofréquence 37.

Le substrat 28 est par exemple formé en FR4 (pour « Flame Retardant 4 » en langue anglo-saxonne).

Le module électronique 15 est reçu dans le premier évidement 10 avec l'ensemble de plages de contacts externes 22 qui affleure la première face 5 de la couche métallique 4, et avec les premiers plots de connexion 24 qui font face au deuxième évidement 11.

Le bloc de connexion électrique 19 est reçu dans le deuxième évidement 11.

La première antenne radiofréquence 17, qui est portée par le substrat 28 du bloc de connexion électrique 19, est ici disposée hors du premier évidement 10 de la couche métallique 4.

Ici, la face interne 30 du substrat 28 du bloc de connexion électrique 19 vient en butée contre l'épaulement 14.

L'épaulement 14 est alors configuré pour empêcher un déplacement du bloc de connexion électrique 19 vers le premier évidement 10.

Les deuxièmes plots de connexion 29 sont ainsi tournés vers le premier évidement 10 et viennent au contact des premiers plots de connexion 24 pour interconnecter électriquement le microcircuit 23 et la première antenne radiofréquence 17.

Les premiers plots de connexion 24 peuvent être en contact direct ou par l'intermédiaire d'un élément d'interface électriquement conducteur, tel qu'un film conducteur anisotrope, avec les deuxièmes plots de connexion 29.

La première antenne radiofréquence 17 comprend au moins une spire électriquement conductrice pour permettre des échanges de signaux radiofréquences entre la carte à puce et un terminal externe.

La carte à puce 1 est ainsi configurée pour établir une établir une communication sans contact avec un terminal externe, par l'intermédiaire de la première antenne radiofréquence 17 et du microcircuit 23.

On notera que le module électronique 15 est ici dépourvu d'antenne, ce qui lui permet d'avoir une taille relativement petite.

Dans l'exemple représenté, le module électronique 15 a une forme globalement cylindrique de section rectangulaire, avec ici les coins arrondis, avec une longueur (plus grand côté du rectangle) comprise entre 11 mm et 13 mm et une largeur (plus petit côté du rectangle) comprise entre 8 mm et 11 mm.

Le module électronique 15 peut ainsi occuper une partie minoritaire de la surface de la première face 5 de la couche métallique 4, par exemple inférieure à 5 %, ce qui permet à la carte d'avoir un aspect métallique important.

Le module électronique 15 présente un premier contour C1 qui est tel qu'un jeu entre le premier contour et le premier pourtour P1, défini par le premier évidement 10 sur la première face 5 de la couche métallique 4, est inférieur ou égal à 0,5 mm.

Ainsi, en observant la première face de la couche métallique 4, le module électronique 15 semble remplir entièrement le premier évidement 10.

Le module électronique 15 présente un volume V1 qui représente par exemple au moins 75%, c'est-à-dire entre 75% et 100%, d'un volume V0 du premier évidement 10.

Le bloc de connexion électrique 19 présente ici un deuxième contour C2 qui est supérieur au premier contour C1 du module électronique 15.

Dans l'exemple représenté, le bloc de connexion électrique 19 a une forme globalement cylindrique de section rectangulaire, avec ici les coins arrondis, et avec une longueur (plus grand côté du rectangle) d'environ 19 mm et une largeur (plus petit côté du rectangle) d'environ 16 mm.

Ainsi, en disposant la première antenne radiofréquence 17 dans le substrat 28 du bloc de connexion électrique 19 plutôt que dans le support 21 du module électronique 15, il est possible d'établir une communication sans contact performante, sans nuire à l'aspect métallique de la première face 5 de la couche métallique 4.

Le deuxième contour C2 du bloc de connexion électrique 19 est tel qu'un jeu entre le deuxième contour et le deuxième pourtour P2, défini par le deuxième évidement 11 sur la deuxième face 6 de la couche métallique 4, est inférieur ou égal à 0,5 mm.

Ainsi, en observant la deuxième face 6 de la couche métallique 4, le bloc de connexion électrique 19 semble remplir entièrement le deuxième évidement 11.

Le bloc de connexion électrique 19 présente un volume V3 qui représente par exemple au moins 75%, c'est-à-dire entre 75% et 100%, d'un volume V2 du deuxième évidement 11.

Dans l'exemple représenté, la face externe 31 du substrat 28 du bloc de connexion électrique 19 affleure la deuxième face 6 de la couche métallique 4 lorsque la face interne 30 du substrat vient en butée contre l'épaulement 14.

La deuxième face 6 de la couche métallique 4 définit ainsi, avec la face externe 31 du substrat 28 du bloc de connexion électrique 19, une surface plane.

La carte à puce 1 peut en outre comporter une couche de protection 36, disposée sur la deuxième face 6 de la couche métallique 4.

La couche de protection 36 recouvre ici toute la surface définie par deuxième face 6 de la couche métallique 4 et la face externe 31 du substrat 28 du bloc de connexion électrique 19.

La couche de protection 36 comporte par exemple une partie transparente pour permettre d'observer la deuxième face 6 de la couche métallique 4 au travers.

La couche de protection 36 peut être réalisée en plastique ou formée d'une encre. La couche de protection 36 peut porter une piste magnétique.

La couche de protection 36 est fixée à la couche métallique 4 par des moyens connus de l'homme du métier.

Le fonctionnement de la carte à puce 1, y compris l'intérêt de former une fente dans la couche métallique, est décrit plus en détail dans la demande de brevet EP4465204A1, déposée par la Demanderesse.

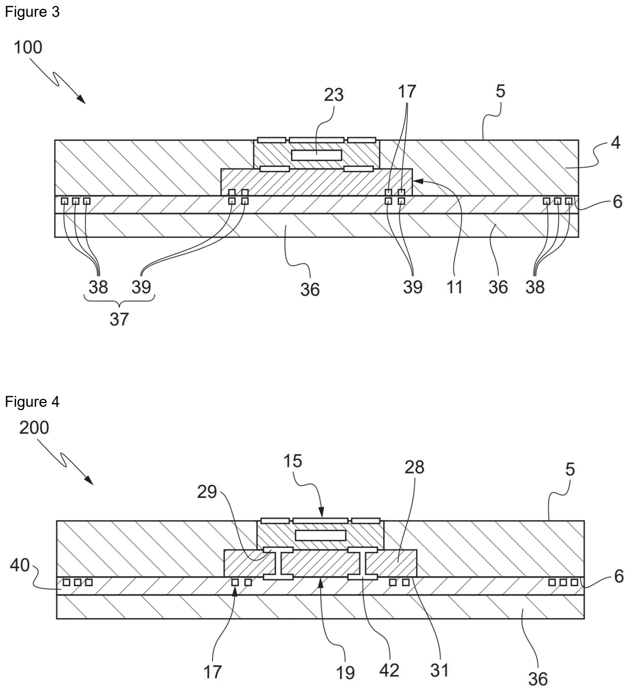

La figure 3 représente une carte à puce 100 selon un deuxième mode de réalisation de l'invention.

La carte à puce 100 est similaire à celle selon le premier mode de réalisation, si ce n'est qu'elle comporte en outre une deuxième antenne radiofréquence 37 et une couche isolante 40 portant la deuxième antenne radiofréquence 37.

Dans l'exemple représenté, la couche isolante 40 est disposée sur la deuxième face 6 de la couche métallique 4.

Le microcircuit 23 est raccordé électriquement à la première antenne radiofréquence 17 tandis que la deuxième antenne radiofréquence 37 est isolée électriquement du microcircuit 23 et de la première antenne radiofréquence 17.

La deuxième antenne radiofréquence 37 est en partie en regard de (alignée avec) la première antenne radiofréquence 17 pour permettre un couplage magnétique avec cette dernière, et ainsi permettre au microcircuit 23 d'utiliser la deuxième antenne radiofréquence 37 pour établir une communication sans contact avec le terminal externe.

La première antenne radiofréquence 17 comprend une pluralité de premières spires électriquement conductrices disposées dans le deuxième évidement 11.

Ici, la taille de la première antenne radiofréquence 17 est limitée dans la mesure où les premières spires conductrices sont contenues dans le deuxième évidement 11.

La deuxième antenne radiofréquence 37 comprend une première partie d'antenne 38 et une deuxième partie d'antenne 39, qui sont raccordées électriquement l'une à l'autre.

La première partie d'antenne 38 comprend des deuxièmes spires électriquement conductrices qui s'étendent en regard d'une partie de la couche métallique 4.

La deuxième partie d'antenne 39 comprend des troisièmes spires électriquement conductrices qui s'étendent en regard du deuxième évidement 11 pour permettre un couplage par induction magnétique (couplage magnétique) entre la première antenne radiofréquence 17 et la deuxième antenne radiofréquence 37.

Le deuxième évidement 11 étant dépourvu de matière métallique, la deuxième partie d'antenne 39 peut être couplée magnétiquement avec la première antenne radiofréquence 17, sans que la couche métallique 4 n'y fasse obstacle.

La deuxième partie d'antenne 39 est ici positionnée en regard de la première antenne radiofréquence 17, ce qui permet d'établir un couplage magnétique performant.

Un décalage peut être toléré entre les premières spires de la première antenne radiofréquence 17 et les troisièmes spires de la deuxième partie d'antenne 39 dans la mesure où le deuxième évidement 11 permet malgré tout d'assurer le couplage magnétique.

Grâce au couplage magnétique établi entre la première antenne radiofréquence 17 et la deuxième antenne radiofréquence 37 sous l'effet d'un champ magnétique, émis par exemple par un terminal externe, le microcircuit 23 peut utiliser la deuxième antenne radiofréquence 37 pour établir une communication sans contact avec le terminal externe.

Le microcircuit 23 est alors configuré pour établir une communication sans contact avec un terminal externe en utilisant la première antenne radiofréquence 17 et la deuxième antenne radiofréquence 37 couplées ensemble par induction magnétique.

Dans l'exemple représenté, la première partie d'antenne 38 de la deuxième antenne radiofréquence 37 occupe une surface plus importante que la deuxième partie d'antenne 39, mais surtout que la première antenne radiofréquence 17, ce qui permet d'établir une communication plus performante qu'avec seulement la première antenne radiofréquence.

La carte à puce 100 comporte ici une couche de protection 36 disposée sur la couche isolante 40, laquelle se trouve interposée entre la couche de protection 36 et la deuxième face 6 de la couche métallique 4.

Le fonctionnement de la carte à puce est décrit plus en détail dans la demande de brevet EP4465204A1, déposée par la Demanderesse.

La figure 4 représente une carte à puce 200 selon un troisième mode de réalisation de l'invention.

La carte à puce 200 est similaire à celle selon le premier mode de réalisation, si ce n'est qu'elle comporte en outre une couche isolante 40 et que la première antenne radiofréquence 17 n'est pas portée par le bloc de connexion électrique 19, mais par la couche isolante.

En d'autres termes, la première antenne radiofréquence 17 est distincte du bloc de connexion électrique 19.

La couche isolante 40 est ici disposée sur la deuxième face 6 de la couche métallique 4.

Dans l'exemple représenté, le module électronique 15 et le bloc de connexion électrique 19 sont dépourvus d'antenne.

Le bloc de connexion électrique 19 comporte des troisièmes plots de connexion 42 disposés sur la face externe 31 du substrat 28.

Chaque troisième plot de connexion 42 est raccordé électriquement à un deuxième plot de connexion 29.

Le bloc de connexion comprend ici des vias 43, intégrés dans le substrat 28, pour raccorder électriquement les troisièmes plots de connexion 42 aux deuxièmes plots de connexion 29.

Chaque troisième plot de connexion 42 est raccordé électriquement à une extrémité de la première antenne radiofréquence 17, interconnectant ainsi le microcircuit 23 et la première antenne radiofréquence 17.

Dans l'exemple, la première antenne radiofréquence 17 est similaire à la deuxième antenne radiofréquence du troisième mode de réalisation.

La carte à puce 200 comporte ici une couche de protection 36 disposée sur la couche isolante 40, laquelle se trouve interposée entre la couche de protection 36 et la deuxième face 6 de la couche métallique 4.

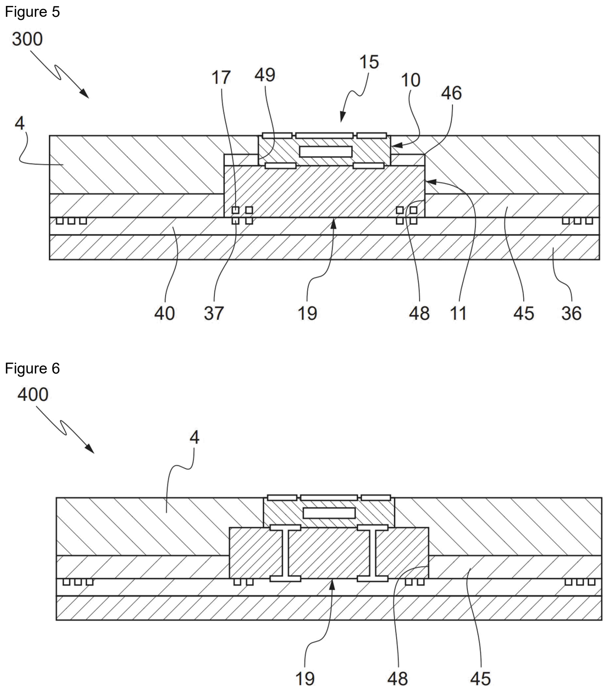

A noter que dans ce mode de réalisation, la première antenne radiofréquence 17 peut être dépourvue de deuxième partie d'antenne 39, comme cela est représenté sur la figure 6.

Le fonctionnement de la carte à puce 200 est similaire à celui de la carte à puce selon le premier mode de réalisation.

La figure 5 représente une carte à puce 300 selon un quatrième mode de réalisation de l'invention.

La carte à puce 300 est similaire à celle selon le deuxième mode de réalisation, si ce n'est que la couche métallique 4 est dépourvue de fente, mais comporte des couches de blindage magnétique 45, 46, réalisées ici en ferrite.

En particulier, la carte à puce 300 comporte une couche de ferrite externe 45 disposée entre la couche isolante 40 portant la deuxième antenne radiofréquence 37 et la couche métallique 4, et une couche de ferrite interne 46 disposée entre le bloc de connexion électrique 19 et l'épaulement 14.

Dans l'exemple représenté, la couche de ferrite externe 45 présente une première ouverture traversante 48 alignée avec le deuxième évidement 11 de la couche métallique 4, tandis que le bloc de connexion électrique 19 saille de la deuxième face 6 de la couche métallique 4 et s'engage au moins en partie dans la première ouverture traversante 48.

La première antenne radiofréquence 17 se trouve du côté de la face externe 31 du substrat 28 du bloc de connexion électrique 19, dans la première ouverture traversante 48 de la couche de ferrite.

La première antenne radiofréquence 17 se trouve ainsi au plus près de la deuxième antenne radiofréquence 37.

La face externe 31 du substrat 28 du bloc de connexion électrique 19 affleure ici une face externe de la couche de ferrite externe 45, formant ainsi une surface plane.

La carte à puce 300 comporte ici une couche de protection 36 disposée sur la première de couche de ferrite 45 et le bloc de connexion électrique 19.

Dans l'exemple représenté, la couche de ferrite interne 46 présente une deuxième ouverture traversante 49 alignée avec le premier évidement 10 de la couche métallique 4, tandis que le module électronique 15 saille dans le deuxième évidement 11 et s'engage au moins en partie dans la deuxième ouverture traversante 49.

La couche de ferrite interne 46 peut être constituée par la partie retirée, par exemple découpée, pour créer la première ouverture traversante 48 dans la couche de ferrite externe 45.

Le fonctionnement de la carte à puce 300 est similaire à celui de la carte à puce selon le deuxième mode de réalisation, sauf en ce qu'elle ne permet pas d'établir une communication identique depuis la première face ou depuis la deuxième face. En effet, du fait de la couche de ferrite externe 45, la communication est plus performante depuis la deuxième face que depuis la première face de la couche métallique 4.

La figure 6 représente une carte à puce 400 selon un cinquième mode de réalisation de l'invention.

La carte à puce 400 est similaire à celle selon le troisième mode de réalisation, si ce n'est que la couche métallique 4 est dépourvue de fente, mais comporte une couche de ferrite 45.

La couche de ferrite 45 est similaire à la couche de ferrite externe décrite dans le quatrième mode de réalisation, de même que l'agencement du bloc de connexion électrique 19 qui s'engage au moins partiellement dans la première ouverture traversante 48 de cette couche.

A noter que dans ce mode de réalisation, la première antenne radiofréquence 17 peut être dépourvue de deuxième partie d'antenne 39, comme cela est représenté sur la figure 6.

Le fonctionnement de la carte à puce 400 est similaire à celui de la carte à puce selon le troisième mode de réalisation, sauf en ce qu'elle ne permet pas d'établir une communication identique depuis la première face ou depuis la deuxième face. En effet, du fait de la couche de ferrite externe 45, la communication est plus performante depuis la deuxième face que depuis la première face de la couche métallique 4.

Dans la carte à puce 1, 100, 200, 300, 400, la première antenne radiofréquence 17 est déportée par rapport au module électronique 15. Il est alors possible pour la première antenne radiofréquence 17 d'occuper une surface supérieure à celle du module électronique 15, tout en préservant l'aspect métallique de la première face 5 de la couche métallique 4.

En d'autres termes, la carte à puce 1, 100, 200, 300, 400 peut comporter un module électronique 15 de taille relativement faible sans contraindre la taille de la première antenne radiofréquence 17. Cela permet ainsi à la carte à puce 1, 100, 200, 300, 400 d'avoir un aspect métallique important, tout en pouvant établir une communication sans contact performante.

En effet, plus la taille du module électronique 15 est faible, plus la surface métallique apparente sur la première face 5 de la couche métallique 4 est grande, et plus la taille de la première antenne radiofréquence 17 est grande, plus la communication sans contact est performante.

En outre, dans la carte à puce 1, 100, 200, 300, 400, le microcircuit 23 et la première antenne radiofréquence 17 sont raccordés électriquement par l'intermédiaire du bloc de connexion électrique 19, qui établit une connexion électrique par la mise en contact (direct ou par l'intermédiaire d'un élément d'interface électriquement conducteur) du premier plot de connexion 24 du module électronique 15 avec le deuxième plot de connexion 29 du bloc de connexion électrique 19.

Autrement dit, pour interconnecter électriquement le microcircuit 23 et la première antenne radiofréquence 17, il suffit d'introduire le module électronique 15 et/ou le bloc de connexion électrique 19 dans son évidement respectif 10, 11 dans la couche métallique 4, jusqu'à ce que les plots de connexion 24, 29 viennent en contact.

La carte à puce 1, 100, 200, 300, 400 est donc également très simple à fabriquer. On notera encore que, du fait de la connexion physique entre la première antenne radiofréquence 17 et le microcircuit 23, les échanges de signaux sont fiables et les pertes d'énergie sont très faibles, améliorant encore la performance de communication sans contact.

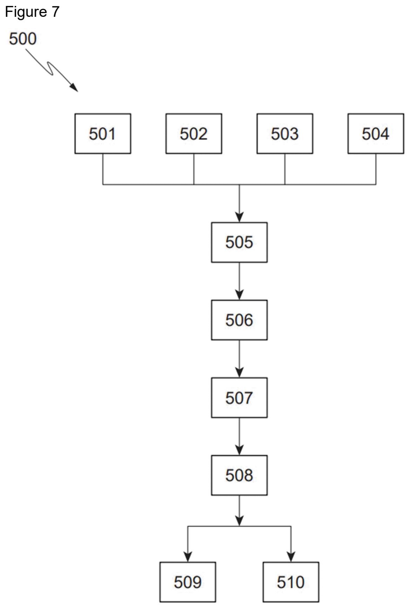

On va maintenant décrire, en référence à la figure 7, un procédé de fabrication 500 d'une carte à puce, telle que celle selon l'un des modes de réalisation décrits en référence aux figures 1 à 6.

Le procédé de fabrication comprend des étapes de :
- fourniture 501 d'une couche métallique pleine, c'est-à-dire dépourvue d'évidement,
- fourniture 502 du module électronique,
- fourniture 503 du bloc de connexion électrique, et
- fourniture 504 d'une première antenne radiofréquence.

Le procédé de fabrication comporte en outre une étape de formation 505 d'un premier évidement depuis la première face de la couche métallique et une étape de formation 506 du deuxième évidement depuis la deuxième face de la couche métallique. Ces étapes peuvent être mises en œuvre simultanément.

Une fois que le premier évidement et le deuxième évidement ont été formés, une couche métallique comportant deux évidements communicants, telle que décrite précédemment, est obtenue.

Le procédé comporte une étape d'introduction 507 du bloc de connexion électrique dans le deuxième évidement depuis la deuxième face de la couche métallique.

Pour une carte à puce selon le quatrième mode de réalisation, illustrée à la figure 5, le procédé de fabrication comporte, préalablement à l'étape d'introduction 507 du bloc de connexion, une étape d'introduction de la couche de blindage magnétique interne dans le deuxième évidement depuis la deuxième face de la couche métallique jusqu'à venir en butée contre l'épaulement.

Lorsque la couche métallique est pourvue d'un épaulement, tel que décrit précédemment, le bloc de connexion (ou la couche de blindage magnétique interne, le cas échéant) est introduit jusqu'à venir en butée contre l'épaulement.

Le procédé comporte ensuite une étape d'assemblage 508 de la couche de protection.

Pour une carte à puce selon le premier mode de réalisation, illustrée à la figure 2, la couche de protection est assemblée sur la deuxième face de la couche métallique à l'aide d'un adhésif pour former un empilement.

Pour une carte à puce selon les deuxième et troisième modes de réalisation, illustrée respectivement aux figures 3 et 4, le procédé de fabrication comporte en outre une étape d'assemblage de la couche isolante sur la deuxième face de la couche métallique à l'aide d'un adhésif. L'assemblage 508 de la couche de protection est donc mis en œuvre sur la couche isolante, de sorte que la couche isolante est interposée entre la couche métallique et la couche de protection.

Pour une carte à puce selon les quatrième et cinquième modes de réalisation, illustrée respectivement aux figures 5 et 6, le procédé de fabrication comporte une étape d'assemblage da la couche de blindage magnétique externe sur la deuxième face de la couche métallique à l'aide d'un adhésif, une étape d'assemblage de la couche isolante sur la couche de blindage magnétique externe à l'aide d'un adhésif, et une étape d'assemblage de la couche de protection sur la couche isolante à l'aide d'un adhésif, de sorte que la couche de blindage magnétique externe est interposée entre la couche métallique et la couche isolante, et que la couche isolante est interposée entre la couche de blindage magnétique externe et la couche de protection.

On notera que, pour la carte à puce selon les troisième et cinquième modes de réalisation, l'assemblage de la couche isolante est mis en œuvre de manière à ce que les troisièmes plots de connexion soient raccordés électriquement aux extrémités de la première antenne radiofréquence, par exemple par l'intermédiaire d'un adhésif électriquement conducteur.

Le procédé de fabrication comporte en outre une étape de laminage 509 de l'empilement.

Pour améliorer la planéité de la carte à puce suite au laminage, il est possible de positionner un insert provisoire dans le premier évidement. Cet insert provisoire est ensuite retiré après le laminage.

Le procédé de fabrication comporte en outre une étape de formation 510 d'une cavité dans la première face du substrat du bloc de connexion électrique depuis le premier évidement, la cavité étant configurée pour recevoir au moins partiellement le module électronique. Comme indiqué précédemment, dans certains cas, le microcircuit est disposé en saillie de la face interne du support et est encapsulé dans une couche de résine, également en saillie de la face interne du support. La cavité peut être formée par fraisage.

Dans certains cas, les deuxièmes plots de connexion sont intégrés dans le substrat du bloc de connexion, et ne sont pas directement accessibles depuis sa face interne. Le procédé de fabrication comporte alors une étape d'usinage de la face interne du substrat du bloc de connexion électrique pour mettre à nu les deuxièmes plots de connexion.

Le procédé comporte ensuite une étape d'introduction 511 du module électronique dans le premier évidement depuis la première face de la couche métallique jusqu'à venir en butée contre le bloc de connexion électrique (ou contre un film électriquement conducteur, qui peut être déformé).

Des variantes non illustrées sont présentées ci-dessous.

La couche métallique peut être constitué d'un ou de plusieurs matériaux en métal.

Dans le cas où la couche métallique est constituée de plusieurs matériaux en métal, un contour de cette couche peut être réalisée en un premier matériau métallique, par exemple en acier inoxydable, tandis qu'une partie interne au contour peut être réalisée en un deuxième matériau métallique, par exemple en tungstène.

Le premier évidement peut s'étendre sur plus de 50% de l'épaisseur de la couche métallique, par exemple sur 60%, 70%, 80% ou même 90%, et le deuxième évidement peut s'étendre sur moins de 50% de l'épaisseur métallique, par exemple sur 40%, 30%, 20% ou même 10%, et inversement.

Le premier pourtour peut délimiter une surface supérieure ou égale à une surface délimitée par le deuxième pourtour.

Le premier évidement et le deuxième évidement peuvent avoir une forme différente qu'une forme cylindrique.

Le premier évidement et le deuxième évidement peuvent avoir une forme cylindrique, mais de section différente, par exemple circulaire.

Le premier évidement peut avoir une section supérieure ou égale à celle du deuxième évidement.

La couche métallique peut être dépourvue d'organe de butée, en particulier d'épaulement.

Le microcircuit peut être disposé différemment sur le support du module électronique, et par exemple être intégré dans ledit support, entre la face interne et la face externe.

La première antenne radiofréquence peut être disposée sur la face externe du substrat. Alternativement, elle peut être disposée sur une la face interne ou sur les deux faces en même (en comprenant une ou plusieurs spires sur chaque face qui sont reliées par un via) par exemple), tant qu'elle est isolée électriquement de la couche métallique.

Le bloc de connexion électrique peut présenter un seul deuxième plot de connexion ou plus de deux deuxièmes plots de connexion. Il en est de même pour les troisièmes plots de connexion.

La carte à puce peut être dépourvue de couche de ferrite et la couche métallique peut être dépourvue de fente.

La carte à puce peut être dépourvue de couche de protection.

La première partie d'antenne peut comporter une seule deuxième spire conductrice. Il en est de même pour la deuxième partie d'antenne.

Concernant le procédé de fabrication, le premier évidement peut être formé depuis la deuxième face de la couche métallique, après que le deuxième évidement ait été formé, c'est-à-dire depuis le deuxième évidement.

Plus généralement, l'invention ne se limite pas aux exemples décrits et représentés.

## Revendications

1. Carte à puce comportant :
- un corps de carte (2) comprenant une couche métallique (4), la couche métallique (4) ayant une première face (5), une deuxième face (6) opposée à la première face (5) et une épaisseur définie entre la première face (5) et la deuxième face (6), la couche métallique (4) présentant un premier évidement (10) formé depuis la première face (5) et s'étendant sur une partie de l'épaisseur de la couche métallique (4) et un deuxième évidement (11) formé depuis la deuxième face (6) et s'étendant sur une partie de l'épaisseur de la couche métallique (4), le premier évidement (10) débouchant dans le deuxième évidement (11),
- un module électronique (15) comprenant :
∘ un support (21) ayant une face interne (25) et une face externe (26) opposée à la face interne (25),
∘ un ensemble de plages de contacts externes (22) disposé sur la face externe (26) du support (21) et étant configuré pour permettre une communication par contact avec un terminal externe,
∘ un microcircuit (23) porté par le support (21) et étant raccordé électriquement à l' ensemble de plages de contacts externes (22), et
∘ un premier jeu de plots de connexion (24) disposé sur la face interne (25) du support (21) et étant raccordé électriquement au microcircuit (23),
le module électronique (15) étant reçu dans le premier évidement (10) avec l'ensemble de plages de contacts externes (22) qui affleure la première face (5) de la couche métallique (4),
- un bloc de connexion électrique (19) comprenant :
∘ un substrat (28) présentant une face interne (30) et une face externe (31) opposée à la face interne (30), et
∘ un deuxième jeu de plots de connexion (29) disposé sur la face interne (30) du substrat (28),
le bloc de connexion électrique (19) étant reçu dans le deuxième évidement (11), avec le deuxième jeu de plots de connexion (29) qui est raccordé électriquement par contact avec le premier jeu de plots de connexion (24) du module électronique (15),
- une première antenne radiofréquence (17) disposée hors du premier évidement (10) et étant raccordée électriquement au deuxième jeu de plots de connexion (29) du bloc de connexion électrique (19),
le premier jeu de plots de connexion (24) du module électronique (15) et le deuxième jeu de plots de connexion (29) du bloc de connexion électrique (19) interconnectant électriquement le microcircuit (23) et la première antenne radiofréquence (17).

2. Carte à puce selon la revendication 1, dans laquelle le bloc de connexion électrique (17) comprend un via (43), intégré dans le substrat (28), pour raccorder électriquement le deuxième jeu de plots de connexion (29) et la première antenne radiofréquence (17).

3. Carte à puce selon la revendication 1 ou 2, dans laquelle le substrat (28) du bloc de connexion électrique (19) porte la première antenne radiofréquence (17).

4. Carte à puce selon l'une quelconque des revendications 1 à 3, comportant en outre une couche isolante (40), distincte du bloc de connexion électrique (19), et une deuxième antenne radiofréquence (37), la couche isolante (40) portant la deuxième antenne radiofréquence (37), la couche isolante (40) et la deuxième antenne radiofréquence (37) étant disposées en regard de la deuxième face (6) de la couche métallique (4), la deuxième antenne radiofréquence (37) étant configurée pour permettre un couplage magnétique avec la première antenne radiofréquence (17).

5. Carte à puce selon la revendication 4, comportant une couche de blindage magnétique externe (45) disposée entre la deuxième face (6) de la couche métallique (4) et la couche isolante (40), la couche de blindage magnétique externe (45) présentant une première ouverture traversante (48) alignée avec le deuxième évidement (11), le bloc de connexion électrique (19) étant reçu au moins en partie dans la première ouverture traversante (48) de la couche de blindage magnétique externe (45).

6. Carte à puce selon l'une quelconque des revendications 1 à 5, dans laquelle la couche métallique (4) comprend un premier organe de butée (14) configuré pour empêcher un déplacement du bloc de connexion électrique (19) vers le premier évidement (10) et/ou un deuxième organe de butée configuré pour empêcher un déplacement du module électronique (15) vers le deuxième évidement (11).

7. Carte à puce selon la revendication 6, dans laquelle le deuxième organe de butée (14) est formé par le bloc de connexion électrique (19) disposé dans le deuxième évidement (11).

8. Carte à puce selon la revendication 6 ou 7, comportant une couche de blindage magnétique interne (46) disposée dans le deuxième évidement (11), entre le bloc de connexion électrique (19) et le premier organe de butée (14).

9. Carte à puce selon l'une quelconque des revendications 1 à 8, dans laquelle le premier évidement (10) définit un premier pourtour (P1) sur la première face (5) de la couche métallique (4), tandis que le deuxième évidement (11) définit un deuxième pourtour (P2) sur la deuxième face (6) de la couche métallique (4), le premier pourtour (P1) délimitant une surface inférieure à une surface délimitée par le deuxième pourtour (P2).

10. Procédé de fabrication d'une carte à puce selon l'une quelconque des revendications 1 à 9, comprenant au moins des étapes de :
- introduction (507) du bloc de connexion électrique dans le deuxième évidement depuis la deuxième face de la couche métallique,
- introduction (511) du module électronique dans le premier évidement depuis la première face de la couche métallique,
l'interconnexion électrique entre le microcircuit et la première antenne radiofréquence étant mise en œuvre par l'introduction du module électronique et/ou l'introduction du bloc de connexion électrique dans son évidement respectif jusqu'à ce que le premier jeu de plots de connexion et le deuxième jeu de plots de connexion viennent en contact.

11. Procédé de fabrication selon la revendication 10, dans lequel, au cours de l'étape d'introduction (507) du bloc de connexion électrique, le bloc de connexion électrique est introduit jusqu'à venir en butée contre un premier organe de butée configuré pour empêcher un déplacement du bloc de connexion électrique vers le premier évidement,
dans lequel l'étape d'introduction (507) du bloc de connexion électrique est mise en œuvre avant l'étape d'introduction (511) du module électronique, et dans lequel, au cours de l'étape d'introduction (511) du module électronique, le module électronique est introduit jusqu'à venir en butée contre le bloc de connexion électrique.

12. Procédé de fabrication selon la revendication 10 ou 11, comprenant en outre une étape de :
- formation (505) du premier évidement à partir de la première face de la couche métallique,
- formation (506) du deuxième évidement à partir de la deuxième face de la couche métallique,
les étapes de formation (505) du premier évidement et de formation (506) du deuxième évidement étant mises en œuvre avant les étapes d'introduction (507) du bloc de connexion électrique et d'introduction (511) du module électronique.
